# EUROPÄISCHE PATENTSCHRIFT

(11) **EP 3 524 335 B1**
(45) Veröffentlichungstag und Bekanntmachung des Hinweises auf die Patenterteilung: **08.12.2021**
(21) Anmeldenummer: 19156729.6
(22) Anmeldetag: 12.02.2019
(51) Int. Cl.: B01D 46/24, B01D 46/00, B01D 46/42

(54) **FILTERPATRONE MIT AUS FILTERELEMENT HERVORSTEHENDER STRÖMUNGSLEITVORRICHTUNG, FILTERANLAGE UND VERFAHREN ZUM REINIGEN EINER FILTERPATRONE**
FILTER CARTRIDGE WITH FLOW CONTROL DEVICE PROTRUDING FROM FILTER ELEMENT, FILTER DEVICE AND METHOD FOR CLEANING A FILTER CARTRIDGE
CARTOUCHE FILTRANTE POURVU DE DISPOSITIF DE CONDUITE D'ÉCOULEMENT, INSTALLATION FILTRANTE ET PROCÉDÉ DE NETTOYAGE D'UNE CARTOUCHE FILTRANTE

(30) Priorität: 13.02.2018 DE 102018103154
(43) Veröffentlichungstag der Anmeldung: 14.08.2019
(73) Patentinhaber: Camfil APC GmbH, 78532 Tuttlingen (DE)
(72) Erfinder: HANDTE, Jakob, 78532 Tuttlingen (DE); BISOGNI, Dominick, 78532 Tuttlingen (DE); HUCKABY, Randilyne, 78532 Tuttlingen (DE); LISTENBEE, Ryan, 78532 Tuttlingen (DE); SIMINO, Adam, 78532 Tuttlingen (DE); WELLS, Alex, 78532 Tuttlingen (DE); VANGILDER, Daniel, 78532 Tuttlingen (DE)
(74) Vertreter: Winter, Brandl - Partnerschaft mbB

(56) Entgegenhaltungen:
- WO-A1-96/03195
- WO-A1-98/34713
- DD-A1- 255 673
- DE-A1- 4 242 991
- KR-A- 20130 097 956

## Beschreibung

Die Erfindung betrifft eine Filterpatrone zum Entfernen von Verunreinigungen aus einem zu filternden Rohgasstrom, mit einem zylindrischen Filterelement aus Filtermaterial, in dem ein Filtereinsatz, beispielsweise aus Filtermaterial oder aus luftundurchlässigem Material, eingesetzt ist, wobei zwischen dem Filterelement und dem Filtereinsatz ein ringförmiger Innenraum gebildet ist, wobei das Filtermaterial ausgelegt ist, um bei Beaufschlagen mit einem Druckluftstrom entgegen einer Durchströmrichtung des Rohgasstroms gereinigt zu werden. Zudem weist die Filterpatrone eine als Strömungsleitvorrichtung ausgebildete Kappe zum Leiten des Druckluftstroms auf, wobei die Kappe an einem axialen Ende des Filtereinsatzes angeordnet ist, an dem Filtereinsatz befestigt ist und so angeordnet ist, dass sie über eine Axiallänge des Filterelements in Axialrichtung hervorsteht. Dabei ist ein erster Abschnitt der Kappe in Axialrichtung außerhalb des Filterelements angeordnet und ein zweiter Abschnitt der Kappe innerhalb des Filterelements angeordnet.

Weiterhin betrifft die Erfindung eine Filteranlage zum Entfernen von Verunreinigungen aus einem zu filternden Rohgasstrom, mit einem Gehäuse, in dem zumindest eine solche Filterpatrone angeordnet ist, und mit einem Drucklufttank, der zumindest eine Düse aufweist und ausgelegt ist, um den Druckluftstrom aus der Düse zum Beaufschlagen des Filtermaterials auszustoßen. Ferner betrifft die Erfindung ein Verfahren zum Reinigen einer solchen Filterpatrone, vorzugsweise in einer solchen Filteranlage, wobei ein Druckluftstrom von einer Düse ausgestoßen wird, der danach die Kappe der Filterpatrone anströmt und durch die Außenform der Kappe so aufgeweitet wird, dass er das gesamte Filtermaterial des Filterelements erfasst.

Aus dem Stand der Technik sind bereits Filterpatronen bekannt. Zum Beispiel offenbart die US 5,972,059 eine Luftfilteranordung mit einem zylindrischen Luftfilterelement, mit einem Basiselement, das eine darin ausgebildete Öffnung aufweist, mit einem oberen Element, das eine darin ausgebildete Öffnung aufweist, wobei die Öffnung des oberen Elements dem einen Ende des zylindrischen Luftfilterelements gegenüberliegend angeordnet ist, wobei die Öffnung des Basiselements dem anderen Ende des zylindrischen Luftfilterelements gegenüberliegend angeordnet ist, mit einem gestreckten konischen Filterelement, das einen Kopfabschnitt aufweist, wobei sich die in Längsrichtung äußere Wand des konischen Filterelements dem größten Teil der in Längsrichtung inneren Wand des zylindrischen Filterelements gegenüberliegend erstreckt, wobei die Öffnung des Basiselements dem Basisabschnitt des konischen Filterelements gegenüberliegend angeordnet ist, und mit Mitteln zum Befestigen des Kopfabschnitts des konischen Filterelements an der inneren Wand des zylindrischen Filterelements, wobei zu filternde Luft in den Innenbereich des konischen Filterelements durch den Basisabschnitt davon geführt wird, wobei die Luft durch die Wände des konischen Filterelements in den Raum zwischen der äußeren Wand des konischen Filterelements und der inneren Wand des konischen Filterelements hindurch strömt, wobei die zu reinigende Luft ferner durch die Wände des zylindrischen Filterelements in den Raum zwischen der äußeren Wand des konischen Filterelements und der inneren Wand des zylindrischen Filterelements hindurch strömt, und wobei die Luft in dem Raum saubere Luft ist, die durch die Öffnung in dem oberen Element herausströmt. Es wird also eine Filterpatrone offenbart, bei der die zu reinigende Luft sowohl durch die äußere Wand des zylindrischen Elements nach innen als auch durch die innere Wand des konischen Filterelements nach außen jeweils in den Innenraum zwischen dem konischen Filterelement und dem zylindrischen Filterelement geführt wird und dadurch gereinigt wird.

Auch ist aus der WO 98/34713 A1 oder aus der DE 42 42 991 A1 jeweils eine Filterpatrone bekannt, die ein Filterelement, einen in dem Filterelement eingesetzten Filtereinsatz und einen sich in Richtung einer Düse verjüngenden Konus besitzt, wobei der Konus vollständig außerhalb des Filterelements angeordnet ist.

Ferner ist aus der WO 96/03195 A1 eine Filterpatrone mit einem Filterelement und einer teilweise darüber hervorstehenden Kappe bekannt.

Der Stand der Technik hat jedoch immer den Nachteil, dass eine solche Filterpatrone abgereinigt werden muss, um die Standzeit der Filterpatrone zu verlängern. Um den Staub aus dem Filtermaterial der Filterpatrone zu entfernen, wird üblicherweise die Filterpatrone mit einem Druckluftstrom, der entgegen der Durchströmrichtung der zu reinigenden Luft gerichtet ist, beaufschlagt. Dadurch fallen der Staub und die Verunreinigungen, die sich in dem Filtermaterial festsetzen, von der Filterpatrone in Schwerkraftrichtung ab. Nachteiligerweise wird jedoch beim Abreinigen einer Filterpatrone wie sie in der US-Patentanmeldung offenbart ist, das Filtermaterial nur ungleichmäßig von der Filterpatrone abgereinigt, so dass die Reinigungsleistung der Filterpatrone mit der Zeit erheblich sinkt oder häufiger oder mit einem höheren Luftdruck abgereinigt werden muss, was sich wiederum nachteilig auf die Lebensdauer der Filterpatrone auswirkt. Insbesondere wird zumeist der obere Teil der Filterpatrone nur unzureichend abgereinigt. Außerdem müssen die Filterpatrone und eine Druckluftstromquelle so weit voneinander beabstandet angeordnet werden, dass der Druckluftstrom sich so aufweiten kann, dass er das Filtermaterial des Filterelements erfassen kann. Dadurch benötigt die Filteranlage jedoch einen verhältnismäßig großen axialen Bauraum. Insbesondere ist es oftmals nicht möglich, den Abstand zwischen einer den Druckluftstrom ausstoßenden Düse und einem Filterpatroneneintritt, der aufgrund des geringen Öffnungswinkels bei einem Freistrahl verhältnismäßig groß sein muss, groß genug auszugestalten.

Es ist also die Aufgabe der Erfindung, die Nachteile aus dem Stand der Technik zu vermeiden oder wenigstens zu verringern. Insbesondere soll eine Filterpatrone zum Einsetzen in einer Filteranlage bereitgestellt werden, mit der eine besonders kompakte Bauweise der Filteranlage bei gleichzeitig verbessertem Abreinigungseffekt realisiert werden kann. Insbesondere soll eine Filterpatrone bereitgestellt werden, die so aufgebaut ist, dass sie besonders gut von Staub und Verunreinigungen abgereinigt werden kann, bei gleichzeitig geringem Druckluftverbrauch. Üblicherweise wird nämlich die Intensität des zur Abreinigung eingesetzten Druckluftstroms durch Erhöhen des Vordrucks im Drucktank erhöht, um das Abreinigungsergebnis zu verbessern. Dadurch wird die Filterpatrone jedoch höher beansprucht, so dass sich die Standzeit und Lebensdauer der Filterpatrone erheblich verringert. Insbesondere soll eine Filterpatrone bereitgestellt werden, die auch bei geringerem Vordruck im Drucktank besonders gleichmäßig über ihre gesamte Filterfläche abgereinigt werden kann.

Die Aufgabe der Erfindung wird durch eine Filterpatrone mit den Merkmalen des Anspruchs 1 gelöst. Insbesondere ist die Kappe so angeordnet, dass sie über eine Axiallänge des Filterelements in Axialrichtung hervorsteht. Das heißt, dass die Kappe in Axialrichtung aus dem Filterelement herausragt. Die Kappe ist dabei an einem axialen Ende des Filtereinsatzes angeordnet und an dem Filtereinsatz befestigt. Dadurch wird vorteilhafterweise erreicht, dass der Druckluftstrom an der Kappe und danach an der Außenseite des Filtereinsatzes entlangströmen kann. Zudem hat die Kappe eine Außenform, die einer Parabelfunktion folgt. Dadurch kann die Strömung des Druckluftstroms besonders energieverlustarm aufgeweitet werden. Das heißt also auch, dass die Kappe rotationssymmetrisch ausgebildet ist, wobei die Kappe durch Rotation einer Parabel um ihre Längsachse gebildet wird. Das bedeutet also, dass jeder Längsquerschnitt der Kappe parabelförmig ausgebildet ist. Weiter bedeutet es auch, dass jeder Querschnitt der Kappe kreisförmig ist. Erfindungsgemäß ist ein erster Abschnitt der Kappe in Axialrichtung außerhalb des Filterelements angeordnet ist und ein zweiter Abschnitt der Kappe innerhalb des Filterelements angeordnet ist, wobei der erste Abschnitt der Kappe in Axialrichtung eine Axiallänge hat, die 0,5- bis 1,0-mal so groß wie ein Innendurchmesser des Filterelements ist. Dies hat den Vorteil, dass der Druckluftstrom schon vor Erreichen des Filterelements auf den gewünschten Ringquerschnitt bzw. auf den gewünschten mit Druckluft zu beaufschlagenden Innendurchmesser der Filterpatrone aufgeweitet werden kann, so dass der axiale Abstand zwischen einer Druckluftstromquelle und der Filterpatrone verringert werden kann, was sich günstig auf den benötigten axialen Bauraum der gesamten Filteranlage auswirkt. Außerdem bieten sich durch das in Axialrichtung "frühere Aufweiten" Gestaltungsfreiheiten hinsichtlich der Außenform der Kappe, so dass der Druckluftstrom beispielsweise langsamer, d.h. weniger stark, aufgeweitet werden muss, was Vorteile hinsichtlich einer Reduzierung des Energieverlusts beim Aufweiten ergibt. So können besonders günstige Strömungsleiteigenschaften erwirkt werden, insbesondere eine Reduzierung des Energieverlusts des Druckluftstroms, da der Druckluftstrom verhältnismäßig sanft aufgeweitet werden kann. Außerdem wird der axiale Vorstand der Filterpatrone so in einem geeigneten Maß gehalten, so dass ein Austauschen der Filterpatrone ermöglicht bleibt.

Vorteilhafte Ausführungsformen werden in den Unteransprüchen beansprucht und werden nachfolgend näher erläutert.

Im Folgenden wird eine Richtung, die parallel zu einer Zentralachse der Filterpatrone (bzw. des Filterelements bzw. des Filtereinsatzes bzw. der Kappe) ist, als eine Axialrichtung bezeichnet. Im Folgenden wird eine Richtung, die eine Axialrichtung ist und in die der Druckluftstrom strömt, als eine erste Axialrichtung bezeichnet. Eine Richtung, die der ersten Axialrichtung entgegen gerichtet ist, wird als eine zweite Axialrichtung bezeichnet. Der Rohgasstrom strömt also in der zweiten Axialrichtung in die Filterpatrone ein, während der Druckluftstrom in der ersten Axialrichtung in die Filterpatrone einströmt.

Im Folgenden wird das eine axiale Ende der Filterpatrone (bzw. des Filterelements bzw. des Filtereinsatzes bzw. der Kappe), das der ersten Axialrichtung zugewandt ist, als ein erstes axiales Ende bezeichnet und das andere axiale Ende der Filterpatrone (bzw. des Filterelements bzw. des Filtereinsatzes bzw. der Kappe), das der zweiten Axialrichtung zugewandt ist, wird als ein zweites axiales Ende bezeichnet.

Zudem ist es zweckmäßig, wenn ein erstes axiales Ende der Kappe in Axialrichtung außerhalb des Filterelements angeordnet ist. So kann in vorteilhafter Weise erwirkt werden, dass der Druckluftstrom schon bei Erreichen des Filterelements auf den gewünschten Durchmesser aufgeweitet ist, so dass auch bei ein Abschnitt des Filterelements an einem ersten axialen Ende, also an einem druckluftstromzugewandten Ende, von dem Druckluftstrom erfasst und dadurch ausreichend abgereinigt werden kann.

Ferner ist es vorteilhaft, wenn ein Außendurchmesser der Kappe von dem ersten axialen Ende der Kappe zu einem zweiten axialen Ende der Kappe, das dem ersten axialen Ende der Kappe gegenüberliegt, zunimmt. Das heißt, dass der Außendurchmesser der Kappe an dem ersten axialen Ende über eine Axiallänge der Kappe gesehen am kleinsten ist und der Außendurchmesser der Kappe an dem zweiten axialen Ende über eine Axiallänge der Kappe gesehen am größten ist. Da der Druckluftstrom zuerst an dem ersten axialen Ende der Kappe auf die Kappe auftrifft, wird der Druckluftstrom durch die sich verbreiternde Außenform der Kappe gezielt nach radial außen geleitet und dadurch aufgeweitet. Durch eine Steigung bzw. durch eine Krümmung der Außendurchmesser-Verbreiterung wird demnach gesteuert, in welche Richtung bzw. auf weichen Strömungsweg der Druckluftstrom geleitet wird.

Weiterhin ist es bevorzugt, wenn das zweite axiale Ende der Kappe in Axialrichtung innerhalb des Filterelements oder am Beginn des Filterelements angeordnet ist. Dadurch wird vorteilhafterweise gewährleistet, dass der Druckluftstrom, der entlang der Außenform der Kappe strömt, in den Innenraum der Filterpatrone einströmt und von dort aus die Wände der Filterpatrone erfasst.

Außerdem zeichnet sich ein günstiges Ausführungsbeispiel dadurch aus, dass die Kappe zwei Abschnitte aufweist, wobei ein erster Abschnitt, nachfolgend auch als ein Endstück bezeichnet, der Kappe in Axialrichtung außerhalb des Filterelements angeordnet ist und ein zweiter Abschnitt, nachfolgend auch als ein Grundkörper bezeichnet, der Kappe innerhalb des Filterelements angeordnet ist. Das heißt, dass der erste Abschnitt der Kappe der Teil der Kappe ist, der in Axialrichtung aus dem Filterelement herausragt, während der zweite Abschnitt der Kappe der Teil der Kappe ist, der in Axialrichtung innerhalb des Filterelements angeordnet ist, das heißt, auf der gleichen axialen Höhe wie das Filterelement angeordnet ist. Mit anderen Worten ist die Kappe teilweise in dem Innenraum und teilweise außerhalb des Innenraums der Filterpatrone angeordnet. Dadurch kann der Druckluftstrom besonders vorteilhaft zu den Wänden der Filterpatrone, also zu dem Filtermaterial des Filterelements und zu dem Filtermaterial des Filtereinsatzes, geleitet werden. Gleichzeitig kann der Abstand zwischen der Druckluftquelle und der Filterpatrone erheblich verringert werden im Gegensatz zu einer Filterpatrone, bei der die Kappe vollständig innerhalb des Filterelements, also vollständig in dem Innenraum, angeordnet ist.

Zusätzlich ist es von Vorteil, wenn der erste Abschnitt der Kappe und der zweite Abschnitt der Kappe integral, d.h. einstückig, ausgebildet sind. Dadurch lassen sich zum einen die Herstellungskosten der Kappe senken und zum anderen lässt sich das Montageverfahren vereinfachen, da die beiden Abschnitte nicht zueinander ausgerichtet und aneinander montiert werden müssen. Außerdem lässt sich so ein besonders glatter, d.h. nahtloser/stufenloser, Übergang zwischen den beiden Abschnitten realisieren.

Weiterhin ist es auch möglich, wenn der erste Abschnitt der Kappe und der zweite Abschnitt der Kappe separat, d.h. als voneinander getrennte Bauteile, ausgebildet sind. Dadurch wird ermöglicht, dass die beiden Abschnitt separat voneinander montiert werden, z.B. der eine Abschnitt an einem gehäusefesten Bauteil und der andere Abschnitt an der Filterpatrone, so dass erst beim Einsetzen der Filterpatrone in die Filteranlage eine komplette Kappe gebildet wird. Dadurch kann das Austauschen der Filterpatrone erleichtert werden.

Ferner ist es zweckmäßig, wenn der erste Abschnitt der Kappe in Axialrichtung eine Axiallänge hat, die 0,5- bis 1,0-mal so groß wie ein Innendurchmesser des Filterelements ist. So können besonders günstige Strömungsleiteigenschaften erwirkt werden, insbesondere eine Reduzierung des Energieverlusts des Druckluftstroms, da der Druckluftstrom verhältnismäßig sanft aufgeweitet werden kann. Außerdem wird der axiale Vorstand der Filterpatrone so in einem geeigneten Maß gehalten, so dass ein Austauschen der Filterpatrone ermöglicht bleibt.

Darüber hinaus zeichnet sich ein günstiges Ausführungsbeispiel dadurch aus, dass der erste Abschnitt der Kappe eine größere Axiallänge als der zweite Abschnitt der Kappe besitzt. Das heißt, dass ein größerer Teil der Kappe hinsichtlich der axialen Erstreckung außerhalb des Filterelements angeordnet ist. Insbesondere bei Filterpatronen mit einem großen Innendurchmesser kann so ein optimiertes Abreinigungsergebnis erwirkt werden.

Zudem ist es von Vorteil, wenn die Kappe vollständig außerhalb des Filterelements, d.h. in Axialrichtung nicht innerhalb des Filterelements, also nicht auf der gleichen axialen Höhe wie das Filterelement, angeordnet ist. Dadurch kann in vorteilhafter Weise die gesamte Länge des Filterelements abgereinigt werden, weil der Druckluftstrom schon bei Eintreten in die Filterpatrone auf den Durchmesser des Filterelements aufgeweitet ist.

Gemäß einer bevorzugten Ausführungsform kann der erste Abschnitt der Kappe eine kleinere Axiallänge als der zweite Abschnitt der Kappe besitzen. Das heißt, dass ein größerer Teil der Kappe hinsichtlich der axialen Erstreckung innerhalb des Filterelements angeordnet ist. Besonders bei Filterpatronen mit verhältnismäßig kleiner axialer Erstreckung kann dadurch das Abreinigungsergebnis verbessert werden.

Die Aufgabe der Erfindung wird auch durch eine Filteranlage zum Entfernen von Verunreinigungen aus einem zu filternden Rohgasstrom, mit einem Gehäuse, in dem zumindest eine solche Filterpatrone angeordnet ist, und mit einem Drucklufttank, der zumindest eine Düse aufweist und ausgelegt ist, um den Druckluftstrom aus der Düse zum Beaufschlagen des Filtermaterials auszustoßen, gelöst. In der erfindungsgemäßen Filteranlage sind also vorzugsweise mehrere erfindungsgemäße Filterpatronen angeordnet, die zur Abreinigung des Filtermaterials von jeweils einer Düse, die zu der Filterpatrone koaxial, aber in Axialrichtung beabstandet angeordnet ist, mit einem Druckluftstrom, nach Art eines Druckluftstoßes, beaufschlagt werden kann. Durch das Einsetzen der Kappe in der Filterpatrone kann der Abstand zwischen der Düse und der Filterpatrone verringert werden, da der Druckluftstrom, der als Freistrahl mit einem Öffnungswinkel von etwa 12° aus der Düse austritt, zusätzlich durch die Kappe aufgeweitet wird. Dadurch wird der Druckluftstrom also auch bei verringertem Abstand so aufgeweitet, dass der Innendurchmesser der Filterpatrone erreicht wird. Weiterhin wird der anströmseitige Kopf des Filtereinsatzes mit geringem Energieverlust umströmt.

Auch ist es bevorzugt, wenn ein Abstand zwischen dem Filterelement und der Düse kleiner als das 2,0-fache, bevorzugt kleiner als das 1,8-fache, weiter bevorzugt kleiner als das 1,5-fache, zudem bevorzugt kleiner als das 1,0-fache, auch bevorzugt kleiner als das 0,5-fache, der Größe des Innendurchmessers des Filterelements ist. Dadurch kann die Filteranlage besonders kompakt in Axialrichtung ausgestaltet werden.

Zudem ist es vorteilhaft, wenn eine Außenform der Kappe sowohl auf den Abstand zwischen der Kappe und der Düse als auch auf den Innendurchmesser des Filterelements abgestimmt ist, so dass der Druckluftstrom so aufgeweitet wird, dass das Filtermaterial des Filterelements von dem Druckluftstrom erfasst wird. Durch geeignete Wahl der Außenform der Kappe kann also der Energieverlust des Druckluftstroms beim Auftreffen auf die Kappe verringert, vorzugsweise minimiert, werden.

Die Aufgabe der Erfindung wird auch durch ein Verfahren zum Reinigen einer solchen Filterpatrone, vorzugsweise in einer solchen Filteranlage, gelöst, wobei ein Druckluftstrom von einer Düse ausgestoßen wird, der danach die Kappe der Filterpatrone anströmt und durch die Außenform der Kappe so aufgeweitet wird, dass er das gesamte Filtermaterial des Filterelements erfasst.

Nach einem weiteren Aspekt der Erfindung, der unabhängig von den vorstehenden Ausführungsformen ist, aber vorzugsweise auch mit Merkmalen der oben genannten Ausführungsformen kombiniert werden kann, betrifft die Erfindung eine Filterpatrone zum Entfernen von Verunreinigungen aus einem zu filternden Rohgasstrom, mit einem zylindrischen Filterelement aus Filtermaterial, in dem ein Filtereinsatz, beispielsweise aus Filtermaterial oder aus luftundurchlässigem Material, eingesetzt ist, wobei zwischen dem Filterelement und dem Filtereinsatz, d. h. innerhalb der Filterpatrone, ein vorzugsweise ringförmiger Innenraum gebildet ist, wobei das Filtermaterial ausgelegt ist, um bei Beaufschlagen mit einem Druckluftstrom entgegen einer Durchströmrichtung des Rohgasstroms gereinigt zu werden, wobei eine als Strömungsleitvorrichtung ausgebildete Kappe vorhanden ist, die so angeordnet und bzgl. ihrer Außenform ausgebildet ist, dass der Druckluftstrom durch die Kappe so aufgeweitet wird, dass das gesamte Filtermaterial des Filterelements vom Druckluftstrom erfasst wird und ein dabei auftretender Energieverlust klein gehalten wird. Dies hat den Vorteil, dass zum einen der Druckluftstrom so geführt wird, dass das gesamte Filtermaterial oder zumindest das gesamte Filtermaterial des zylindrischen Filterelements erfasst wird und nicht nur ein unterer Teil des Filterelements vom Druckluftstrom erfasst wird. Zum anderen wird durch die geeignete Ausbildung der Außenform der Kappe erreicht, dass die Energie des Druckluftstroms beim Aufweiten nur minimal, d.h. so weit wie notwendig, verringert wird. Bei einer erfindungsgemäßen Filterpatrone lässt sich also sowohl die Standzeit der Patrone dadurch verlängern, dass die Filterpatrone durch das verbesserte Abreinigungsergebnis schonender abgereinigt werden kann und weniger häufig abgereinigt werden muss, als auch dadurch, dass Druckluft eingespart werden kann, so dass die Kosten der Abreinigung erheblich verringert werden können.

Zudem ist es zweckmäßig, wenn der auftretende Energieverlust kleiner 40 %, bevorzugt kleiner 20 %, weiter bevorzugt kleiner 10 % ist. Dabei wird die Differenz der Energie zwischen dem Zeitpunkt, an dem der Druckluftstrom auf die Kappe, also ein erstes axiales Ende der Kappe, auftrifft, und dem Zeitpunkt, an dem der Druckluftstrom das am weitesten von der Kappe entfernte Ende des Filterelements erfasst, gemessen. Dadurch wird gewährleistet, dass auch an dem weiter von der Druckluftquelle entfernten Ende des Filterelements genügend Energie mit dem Druckluftstrom ankommt, um ein ausreichendes Reinigungsergebnis zu erzielen.

Im Folgenden wird eine Richtung, die parallel zu einer Zentralachse der Filterpatrone (bzw. des Filterelements bzw. des Filtereinsatzes bzw. der Kappe) ist, als eine Axialrichtung bezeichnet. Im Folgenden wird eine Richtung, die eine Axialrichtung ist und in die der Druckluftstrom strömt, als eine erste Axialrichtung bezeichnet. Eine Richtung, die der ersten Axialrichtung entgegen gerichtet ist, wird als eine zweite Axialrichtung bezeichnet. Der Rohgasstrom strömt also in der zweiten Axialrichtung in die Filterpatrone ein, während der Druckluftstrom in der ersten Axialrichtung in die Filterpatrone einströmt.

Im Folgenden wird das eine axiale Ende der Filterpatrone (bzw. des Filterelements bzw. des Filtereinsatzes bzw. der Kappe), das der ersten Axialrichtung zugewandt ist, als ein erstes axiales Ende bezeichnet und das andere axiale Ende der Filterpatrone (bzw. des Filterelements bzw. des Filtereinsatzes bzw. der Kappe), das der zweiten Axialrichtung zugewandt ist, wird als ein zweites axiales Ende bezeichnet.

Ferner ist es vorteilhaft, wenn die Kappe zumindest teilweise in dem Innenraum der Filterpatrone angeordnet ist. Dadurch wird vermieden, dass die axiale Länge der Filterpatrone durch die Kappe erhöht wird.

Außerdem ist es vorteilhaft, wenn der Innenraum der Filterpatrone über die Axiallänge des Filtereinsatzes und/oder des Filterelements gesehen einen zumindest abschnittsweise konstanten Ringquerschnitt aufweist. Zum einen kann dadurch das Volumen des Innenraums im Vergleich zu einem Innenraum bei einem nicht konstanten Ringquerschnitt, der bspw. bei einem konischen Filtereinsatz erreicht wird, minimiert werden, so dass es einfacher ist, einen höheren Druck in dem Innenraum der Filterpatrone zu erzeugen. Gleichzeitig kann dabei die Filterfläche der Filterpatrone gesteigert werden.

Ferner ist es von Vorteil, wenn der Innenraum über die gesamte Axiallänge des Filtereinsatzes und/oder des Filterelements einen konstanten Ringquerschnitt aufweist. So wird zusätzlich das Abreinigungsergebnis verbessert, da der Querschnitt gleich bleibt und somit der Druckluftstrom über die Axiallänge des Filtereinsatzes nicht weiter aufgeweitet werden muss, was einen zusätzlichen Energieverlust des Druckluftstroms verhindert.

Ein günstiges Ausführungsbeispiel zeichnet sich dadurch aus, dass der Filtereinsatz einen zylindrischen Außendurchmesser aufweist. Zum einen können dadurch die oben genannten Vorteile erreicht werden, und zum anderen wird der Aufbau der Filterpatrone dadurch erheblich vereinfacht.

Zusätzlich ist es bevorzugt, wenn die Außenform der Kappe konvex, vorzugsweise streng konvex, ausgebildet ist. Das heißt, dass sich die Kappe dem Druckluftstrom entgegen wölbt. Das heißt also auch, dass die Kappe von dem Filtereinsatz aus gesehen sich nach außen wölbt bzw. nach außen gewölbt ist. Dadurch wird eine besonders günstige Strömungsumleitung beim Auftreffen des Druckluftstroms auf die Außenform der Kappe erzielt. Insbesondere ist die Ausbildung hinsichtlich einer Minimierung des Energieverlusts und hinsichtlich einer Aufweitung des Druckluftstroms auf den gewünschten Durchmesser des Innenraums bevorzugt.

Auch ist es vorteilhaft, wenn die Kappe an einem axialen Ende des Filtereinsatzes angeordnet ist. Besonders bevorzugt ist es auch, wenn die Kappe an dem Filtereinsatz, insbesondere an einer axialen Endfläche des Filtereinsatzes, befestigt ist. Besonders bevorzugt ist es, wenn ein Querschnitt der Kappe in einen Querschnitt des Filtereinsatzes übergeht, d.h. dass ein Außendurchmesser der Kappe einem Außendurchmesser des Filtereinsatzes an dem Stelle, an dem die Kappe an dem Filtereinsatz anliegt, entspricht. Das heißt auch, dass der Außendurchmesser der Kappe an dem zweiten axialen Ende der Kappe dem Außendurchmesser des Filtereinsatzes an dem ersten axialen Ende des Filtereinsatzes entspricht. Dadurch wird vorteilhafterweise erreicht, dass der Druckluftstrom an der Kappe und danach an der Außenseite des Filtereinsatzes entlangströmen kann.

Ein günstiges Ausführungsbeispiel zeichnet sich also dadurch aus, dass ein Außendurchmesser an einem dem Filtereinsatz zugewandten Ende der Kappe, also an dem zweiten axialen Ende der Kappe, im Wesentlichen dem Außendurchmesser an einem der Kappe zugewandten Ende des Filtereinsatzes, also an dem ersten axialen Ende des Filtereinsatzes, entspricht. Die Außenform der Kappe geht also quasi "nahtlos" in den Filtereinsatz über.

Außerdem ist es vorteilhaft, wenn die Kappe und die Filterpatrone und/oder das Filterelement und/oder der Filtereinsatz koaxial angeordnet sind. Dadurch kann eine gleichmäßige Strömung des Druckluftstroms erwirkt werden.

Ferner ist es bevorzugt, wenn die Kappe beispielsweise je nach Gewichts- oder Steifigkeitsanforderungen aus einem Vollmaterial oder hülsenartig/schalenartig ausgebildet ist.

Insbesondere ist es vorteilhaft, wenn die Außenform der Kappe einer Parabelfunktion bzw. einer Wurzelfunktion folgt. Das heißt, dass eine Außenkontur der Kappe von einem ersten axialen Ende der Kappe, an dem die Krümmung der Kappe am größten ist, bis zu ihrem zweiten axialen Ende, das in Axialrichtung dem ersten axialen Ende gegenüberliegt, einer Wurzelfunktion folgt. Das heißt also auch, dass die Kappe rotationssymmetrisch ausgebildet ist, wobei die Kappe durch Rotation einer Parabel um ihre Längsachse gebildet wird. Das bedeutet also, dass jeder Längsquerschnitt der Kappe parabelförmig ausgebildet ist. Weiter bedeutet es auch, dass jeder Querschnitt der Kappe kreisförmig ist.

Ferner ist die Kappe vorteilhafterweise so ausgebildet, dass eine Steigung der Parabel, der die Außenform der Kappe folgt, in Axialrichtung von dem ersten axialen Ende aus abnimmt. Das bedeutet also, dass der Außendurchmesser der Kappe von dem ersten axialen Ende der Kappe, an dem die Krümmung der Kappe am größten ist, bis zu seinem anderen axialen Ende, dem zweiten axialen Ende, hin in Axialrichtung zunimmt, jedoch mit zunehmender Axiallänge weniger stark im Außendurchmesser zunimmt.

Man könnte auch sagen, dass die Außenform der Kappe so ausgebildet ist, dass ihre Form der Spitze eines Überschallflugzeugs entspricht. Die Kappe weist also eine eierförmige Spitze auf. Mit anderen Worten ist das erste axiale Ende der Kappe stumpf, d.h. nicht spitz, ausgebildet.

Zudem ist es zweckmäßig, wenn die Außenform der Kappe der Funktion f(x) = x^{1/2} (in Worten: x hoch einhalb) folgt. Bei einer Ausbildung der Kappe mit einer solchen Außenform werden besonders günstige Umströmungsverhältnisse geschaffen, die insbesondere für eine Anströmung bei hohen Geschwindigkeiten optimiert ist.

Ferner ist es von Vorteil, wenn die Außenform der Kappe so auf einen Außendurchmesser des Innenraums der Filterpatrone abgestimmt ist, dass der Druckluftstrom bis zu dem Filtermaterial des Filterelements aufgeweitet wird. Dadurch wird der Druckluftstrom dorthin geleitet, wo er durch das Durchströmen des Filtermaterials des Filterelements von innen nach außen, also entgegen der Rohgasstromrichtung, das Filtermaterial abreinigt.

Weiterhin ist es bevorzugt, wenn eine Axiallänge der Kappe 0,5- bis 2-mal so groß wie ein Außendurchmesser des Innenraums der Filterpatrone ist. Weiter bevorzugt beträgt die Axiallänge der Kappe 1,5- bis 1,0-mal der Größe des Außendurchmessers des Innenraums der Filterpatrone. Dadurch wird ein geeigneter Kompromiss/Trade-Off zwischen der Aufweitung des Druckluftstroms und dem Energieverlust des Druckluftstroms beim Auftreffen auf die Kappe erzielt.

Außerdem ist es bevorzugt, wenn die Außenform der Kappe für ein Anströmen einer Strömung mit hoher Geschwindigkeit bis Überschallgeschwindigkeit ausgelegt ist. Das heißt, dass die Außenform der Kappe insbesondere so ausgebildet ist, dass sie beim in Kontakt treten, also beim Anströmen, mit einer Strömung, die sich mit hoher Geschwindigkeit bis zur Überschallgeschwindigkeit ausbreitet, die gewünschte Aufweitung realisiert und gleichzeitig der dadurch entstehende Energieverlust minimiert ist. Eine solche Außenform wird bereits auf anderen Anwendungsgebieten, zum Beispiel auf dem Gebiet der Flugzeugnasen, eingesetzt.

Ferner ist es zweckmäßig, wenn an dem zweiten axialen Ende der Filterpatrone ein Ringbauteil angeordnet ist, das das Filterelement an dem zweiten axialen Ende mit dem Filtereinsatz an dem zweiten axialen Ende verbindet. So wird verhindert, dass sich das gefilterte Rohgas aus dem Innenraum mit dem ungefilterten Rohgas außerhalb der Filterpatrone vermischen kann. Gleichzeitig wird der Filterpatrone dadurch Stabilität gegeben.

Das Ringbauteil dient als ein Filterboden und ist luftundurchlässig ausgestaltet, so dass es der Filterpatrone zusätzliche Stabilität verleiht, da ein festeres Material verwendet werden kann. Insbesondere werden der Filtereinsatz und das Filterelement in eine Pfanne, die mit Gussmaterial, z.B. Harz, gefüllt wird, eingesetzt und abgedichtet verbunden.

Außerdem ist es zweckmäßig, wenn eine Öffnung an einem ersten axialen Ende der Filterpatrone vorhanden ist, aus dem vorteilhafterweise die gereinigte Luft ausströmen kann. Mit anderen Worten ist das erste axiale Ende das Ende der Filterpatrone, aus dem der gefilterte Rohgasstrom, also der Reingasstrom, austritt. Das zweite axiale Ende der Filterpatrone ist dagegen geschlossen, d.h., dass sich die Luft außerhalb der Filterpatrone nicht mit der Luft innerhalb der Filterpatrone mischen kann. Die Luft kann nur durch Filtermaterial in den Innenraum der Filterpatrone gelangen.

Insbesondere ist es bevorzugt, wenn die Öffnung kreisförmig ausgebildet ist. Ein bevorzugtes Ausführungsbeispiel zeichnet sich auch dadurch aus, dass die Öffnung in den Innenraum der Filterpatrone zwischen dem Filtereinsatz und dem Filterelement übergeht. In Axialrichtung von dem ersten axialen Ende der Filterpatrone aus bis zu dem ersten axialen Ende der Kappe besitzt die Filterpatrone also einen kreisförmigen Querschnitt. Durch die Kappe und den Filtereinsatz, der sich an die Kappe in Axialrichtung anschließt, besitzt der Innenraum der Filterpatrone von dem ersten axialen Ende der Kappe bis zu dem zweiten axialen Ende der Filterpatrone einen ringförmigen Querschnitt. Die Kappe ist dabei also möglichst so ausgebildet, dass der Druckluftstrom sanft, d.h. mit minimiertem Energieverlust, von dem kreisförmigen Querschnitt in den ringförmigen Querschnitt geführt wird, also entlang der Außenform der Kappe aufgeweitet wird.

Die Filterpatrone wird in einem Filterbetrieb, in dem der zu filternde Rohgasstrom durch das Filtermaterial strömt, so betrieben, dass die Filterpatrone von ihrem zweiten axialen Ende zu ihrem ersten axialen Ende hin durchströmt wird. Das heißt, dass der Rohgasstrom von außen nach innen in den Innenbereich durch das Filterelement, insbesondere das Filtermaterial des Filterelements, hindurchgeführt wird. Auch heißt das, dass der Rohgasstrom, wenn der Filtereinsatz aus Filtermaterial gebildet ist, von innen nach außen in den Innenbereich durch den Filtereinsatz, insbesondere das Filtermaterial des Filtereinsatzes, hindurchgeführt wird. Es ist aber auch möglich, den Filtereinsatz aus einem luftundurchlässigen/nicht durchströmbaren Material auszubilden, so dass der Filtereinsatz als ein Verdrängungskörper fungiert, der das Abreinigungsergebnis verbessert.

Außerdem ist die Filterpatrone in einem bevorzugten Ausführungsbeispiel so ausgelegt, dass der Rohgasstrom als ein Reingasstrom aus dem Filtermaterial heraustritt. Das heißt, dass der gesamte Innenraum der Filterpatrone eine Reingaskammer bildet, die von dem Filtermaterial des Filterelements und des Filtereinsatzes umgeben ist und die das gefilterte Rohgas beinhaltet, bevor es aus der Öffnung herausströmt.

Zudem ist es vorteilhaft, wenn das Filtermaterial des Filterelements und/oder des Filtereinsatzes sternförmig gefaltet ist, d.h. das ein Querschnitt des Filterelements und/oder des Filtereinsatzes sternförmig ist, da es dadurch eine vergrößerte Filteroberfläche aufweist, was sich positiv auf das Filterergebnis auswirkt.

Die Aufgabe der Erfindung wird auch durch eine Filteranlage zum Entfernen von Verunreinigungen auf einem zu filternden Rohgasstrom gelöst, wobei die Filteranlage ein Gehäuse, in dem zumindest eine erfindungsgemäße Filterpatrone angeordnet ist, ein Drucklufttank, der zumindest eine Düse aufweist und ausgelegt ist, um den Druckluftstrom zum Beaufschlagen des Filtermaterials auszustoßen, aufweist.

Insbesondere ist es von Vorteil, wenn der Drucklufttank ausgelegt ist, um einen Druckluftstrom mit einem Druck von 4 bis 8 bar auszustoßen. Dadurch kann ein gutes Abreinigungsergebnis erzielt werden.

Dabei ist die Außenform der Kappe der erfindungsgemäßen Filterpatrone insbesondere sowohl auf den Außendurchmesser des Innenraums, das heißt auf den Innendurchmesser der Filterpatrone, und auf den Abstand zwischen der Düse und der Filterpatrone abgestimmt, also dass der Druckluftstrom durch die Kappe so aufgeweitet wird, dass das gesamte Filtermaterial vom Druckluftstrom erfasst wird und ein dabei auftretender Energieverlust klein gehalten wird. Die Außenform der Kappe ist also sowohl von den Abmaßen der Filterpatrone, insbesondere von einem Außendurchmesser, als auch von einem Abstand zwischen der Düse, aus der der Druckluftstrom ausgestoßen wird, und der Filterpatrone und von der Strömungsgeschwindigkeit des Druckluftstroms bzw. der Energie des Druckluftstroms abhängig.

Durch die Kappe kann der Abstand in Axialrichtung zwischen der Düse und der Filterpatrone verkleinert werden, da der Öffnungswinkel des Freistrahls vergrößert wird und somit auch das Filtermedium/Filtermaterial am Filterpatroneneintritt, d.h. im oberen Teil der Filterpatrone, angereinigt wird.

Besonders vorteilhaft ist es dabei, wenn die Düse so ausgebildet ist, dass der Druckluftstrom mit hoher Geschwindigkeit bis Überschallgeschwindigkeit aus der Düse heraustritt. Insbesondere ist es dabei von Vorteil, wenn die Düse als eine Laval-Düse ausgebildet ist.

Ferner ist es zweckmäßig, wenn der Abstand in Axialrichtung zwischen der Düse und der Filterpatrone kleiner ist als das Dreifache des Außendurchmessers des Innenraums der Filterpatrone, vorzugsweise kleiner als das Zweifache des Außendurchmessers des Innenraums der Filterpatrone, weiter bevorzugt kleiner als das 1,5-fache des Außendurchmessers des Innenraums der Filterpatrone. Dadurch kann also insbesondere der Bauraum der gesamten Filteranlage in Axialrichtung gering gehalten werden.

Zudem ist es zweckmäßig, wenn die Filterpatrone in Horizontalrichtung oder bevorzugt in Vertikalrichtung angeordnet ist. Das heißt, dass die Axialrichtung der Filterpatrone mit einer Horizontalrichtung bzw. einer Vertikalrichtung/Schwerkraftrichtung überein stimmt. Insbesondere bei einer vertikalen Anordnung der Filterpatrone kann der Staub beim Abreinigen in Schwerkraftrichtung nach unten abfallen, ohne sich wieder auf dem Filterelement festzusetzen.

Ein günstiges Ausführungsbeispiel zeichnet sich dadurch aus, dass mehrere Filterpatronen in der Filteranlage angeordnet sind, dadurch kann die Filterleistung der gesamten Filteranlage gesteigert werden.

Zudem ist es von Vorteil, wenn eine Axiallänge des Filtereinsatzes geringer ist als eine Axiallänge des Filterelements. Mit anderen Worten ist der Filtereinsatz vollständig innerhalb des Filterelements angeordnet. D.h., dass er insbesondere in Axialrichtung nicht über die Axiallänge des Filterelements herausragt. Das heißt auch, dass der Filtereinsatz maximal die gleiche Axiallänge wie die Axiallänge des Filterelements haben kann.

Die Erfindung betrifft auch ein Verfahren zum Reinigen/Abreinigen einer erfindungsgemäßen Filterpatrone, die vorzugsweise in einer erfindungsgemäßen Filteranlage angeordnet ist. Das Verfahren beinhaltet die Schritte, dass zuerst ein Druckluftstrom von einer Düse ausgestoßen wird, der danach die Kappe der Filterpatrone anströmt und durch die Außenform der Kappe so aufgeweitet wird, dass er das gesamte Filtermaterial des Filterelements erfasst.

Nach einem weiteren Aspekt der Erfindung, der unabhängig von den vorstehenden Ausführungsformen ist, aber vorzugsweise auch mit Merkmalen der oben genannten Ausführungsformen kombiniert werden kann, betrifft die Erfindung eine Filterpatrone zum Entfernen von Verunreinigungen aus einem zu filternden Rohgasstrom, mit einem zylindrischen Filterelement aus Filtermaterial, in dem ein Filtereinsatz aus Filtermaterial eingesetzt ist, wobei zwischen dem Filterelement und dem Filtereinsatz ein beispielsweise ringförmiger Innenraum gebildet ist, wobei das Filtermaterial ausgelegt ist, um bei Beaufschlagen mit einem Druckluftstrom entgegen einer Durchströmrichtung des Rohgasstroms gereinigt zu werden, wobei ein Grundkörper einer Strömungsleitvorrichtung mit einer zum Leiten des Druckluftstroms ausgelegten Oberfläche vorhanden ist, wobei der Grundkörper einen distalen Endbereich besitzt, der vorbereitet ist, um durch ein filterpatronen-separates und an einem externen Gehäuse befestigbares Endstück zur Strömungsleitung des Druckluftstroms vervollständigt zu werden.

Mit anderen Worten betrifft die Erfindung eine Filterpatrone zum Entfernen von Verunreinigungen aus einem zu filternden Rohgasstrom, mit einem zylindrischen Filterelement aus Filtermaterial, in dem ein Filtereinsatz aus Filtermaterial eingesetzt ist, wobei zwischen dem Filterelement und dem Filtereinsatz ein Innenraum gebildet ist, wobei das Filtermaterial ausgelegt ist, um bei Beaufschlagen mit einem Druckluftstrom entgegen einer Durchströmrichtung des Rohgasstroms gereinigt zu werden, wobei ein Strömungsleitvorrichtungsabschnitt vorhanden ist, der durch einen anderen Strömungsleitvorrichtungsabschnitt, der nicht Teil der Filterpatrone ist, zum Strömungsleiten vervollständigt wird. Das heißt, dass der Strömungsleitvorrichtungsabschnitt der Filterpatrone unvollständig ist. Das heißt auch, dass der Strömungsleitvorrichtungsabschnitt der Filterpatrone so ausgebildet und angeordnet ist, dass er (nur) in Zusammenwirken mit dem anderen Strömungsleitvorrichtungsabschnitt den Druckluftstrom leitet, d.h., die Funktion, den Druckluftstrom zu leiten, erfüllt.

Der Grundkörper ist der Strömungsleitvorrichtungsabschnitt, der an der Filterpatrone befestigt ist; er ist also Teil der Filterpatrone. Das Endstück ist der andere Strömungsleitvorrichtungsabschnitt, der nicht an der Filterpatrone, sondern an einem externen Gehäuse befestigt ist. Gemeinsam erfüllen der Grundkörper und das Endstück die Funktion der Strömungsleitvorrichtung zum Leiten des Druckluftstroms.

Dies hat den Vorteil, dass durch die zweigeteilte Ausführung der Strömungsleitvorrichtung ein Austauschen einer Filterpatrone ermöglicht wird, wobei ein Teil (nämlich das Endstück) in dem Gehäuse verbleibt. Dadurch kann die Filterpatrone beispielsweise in Horizontalrichtung herausgezogen werden (zum Beispiel über Halteschienen), da ein in Axialrichtung aus der Filterpatrone herausstehender Teil der Strömungsleitvorrichtung, d.h. das Endstück, in dem Gehäuse verbleibt und die Filterpatrone somit bündig an einem axialen Ende des Filterelements endet/abschließt. Außerdem ist es vorteilhafterweise möglich, dass nur ein der Grundkörper der Strömungsleitvorrichtung ersetzt werden muss und dass das Endstück wiederverwendet werden kann, was sich günstig auf die Herstellungskosten der (Ersatz-)Filterpatrone auswirkt und das Austauschen der Filterpatrone erleichtert.

Zudem ist es zweckmäßig, wenn die Oberfläche des Grundkörpers, insbesondere eine radiale Außenfläche, (des zweiten Abschnitts) so ausgeformt und angeordnet ist, dass sie in eine Außenoberfläche, insbesondere eine radiale Außenfläche, des Endstücks (d.h. des ersten Abschnitts) nahtlos und/oder stufenlos und/oder steigungskonform und/oder krümmungskonform übergeht. Dabei heißt steigungskonform, dass die Steigung der Oberfläche des Grundkörpers und die Steigung der Außenoberfläche des Endstücks an dem Punkt des Übergangs (der (Außen-)Oberflächen) dieselbe ist. Dabei heißt krümmungskonform, dass die Krümmung der Oberfläche des Grundkörpers und die Krümmung der Außenoberfläche des Endstücks an dem Punkt des Übergangs (der (Außen-)Oberflächen) dieselbe ist. Dadurch wird ermöglicht, dass die Strömung des Druckluftstroms bei minimalem Energieverlust an den Oberflächen entlanggeleitet wird.

Außerdem ist es vorteilhaft, wenn der Übergang der Oberfläche des Grundkörpers in die Außenoberfläche des Endstücks derart ist, dass die Strömung des Druckluftstroms während des Reinigens an einer Gesamtoberfläche des Grundkörpers und des Endstücks anliegt, um im Reinigungsfall wenigstens 80%, bevorzugt mehr als 90%, weiter bevorzugt mehr als 95%, besonders bevorzugt 100%, des Filtermaterials des Filterelements zu erreichen. Der Grundkörper und das Endstück liegen also derart an, dass ihre Oberflächen eine Gesamtoberfläche bilden, an der die Strömung des Druckluftstroms entlanggeleitet wird, und dadurch aufgeweitet wird, so dass die Strömung das Filtermaterial erfasst.

Weiterhin ist es bevorzugt, wenn (nur) der Grundkörper, also nur ein Abschnitt bzw. ein Teil der Strömungsleitvorrichtung, an dem Filtermaterial, beispielsweise an dem Filtereinsatz, befestigt ist. D.h. im Umkehrschluss, dass zumindest ein Teil der Strömungsleitvorrichtung, nämlich das Endstück, nicht an dem Filtermaterial und/oder nicht an der Filterpatrone befestigt ist. Dadurch werden die auszutauschenden Bestandteile beim Tausch einer Filterpatrone reduziert. Außerdem wird dadurch die Filterfläche vergrößert, da der Filtereinsatz verlängert wird.

Eine weitere Funktion, welche über die Strömungsleitvorrichtung erfüllt wird, ist das Erden der Filterpatrone mit dem Gehäuse. Dies ist insbesondere bei explosiven Stäuben bei Verwendung von antistatischem Filtermaterial erforderlich und sicherheitsrelevant. Hierfür wird das Filtermaterial elektrisch leitend mit der Kappenhälfte an der Filterpatrone, also mit dem Grundkörper, verbunden ist. Das Gehäuse ist elektrisch leitend mit der Kappenspitze/dem Endstück, die/das sich im Filtergehäuse befindet, verbunden.

Bei Montage der Filterpatrone wird ein elektrischer Kontakt zwischen den beiden Kappenstücken, also zwischen dem Grundkörper und dem Endstück, beispielsweise über eine Feder oder einen Formschluss hergestellt, und die elektrische Spannung kann aus der Filterpatrone in das Gehäuse abfließen.

Über den gleichen Mechanismus kann bei der Montage der Filterpatrone und beim Zusammenführen der Kappenstücke durch ein Schließen des Stromkreises sichergestellt werden, dass nur die für den Einsatzfall richtigen Filterpatronen eingesetzt werden.

Alternativ kann auch über eine RFID-Technologie, welche als Sender und Empfänger in dem Endstück und dem Grundkörper der Strömungsleitvorrichtung verbaut wird, gelöst werden, dass bei Fehlbestücken die Anlage gesperrt wird.

Über die Strömungsleitvorrichtung kann über einen elektrischen Kontakt an der Trennstelle die Erdung der Filterpatrone durchgeführt werden.

Ferner ist es von Vorteil, wenn elektrisch leitende Elemente im Grundkörper zum Erden vorhanden sind, die so ausgelegt sind, dass eine Erdung der Filterpatrone gegenüber dem Gehäuse erfolgt. Insbesondere ist es von Vorteil, wenn die elektrisch leitenden Elemente als federnde Kontaktelektroden ausgebildet sind. Alternativ ist es möglich, Formschlusselemente wie Stecker oder eine Profilierung in der Berührungsfläche/Kontaktfläche zu dem Endstück vorzusehen.

Außerdem ist es zweckmäßig, wenn der Grundkörper einen Empfänger oder einen Sender mit RFID-Technologie zum Überprüfen einer passenden Filterpatrone und/oder zum Überprüfen einer Positionierung der Filterpatrone aufweist. Dadurch kann in einfacher Weise überprüft werden, ob eine passende Filterpatrone in die Filteranlage eingesetzt wurde und/oder ob die Filterpatrone richtig positioniert ist. Der Empfänger oder Sender des Grundkörpers ist ausgelegt, um mit einem korrespondieren Sender oder Empfänger im Endstück zu kommunizieren. Alternativ kann die Überprüfung auch durch das Schließen eines elektrischen Kreises und/oder durch einen mechanischen Formschluss beim Anpressen des Grundkörpers an das Endstück bzw. beim Anpressen der Filterpatrone an das Filtergehäuse erfolgen.

Der geteilte Grundkörper übernimmt über seine Kontaktfläche zusätzliche Funktionen wie eine Erdung des Filterelementes bzw. der Filterpatrone gegenüber dem Filtergehäuse, Überprüfung der Positionierung der Filterpatrone im Gehäuse, Sicherstellung und Überprüfung des Vorhandenseins der richtigen Filterpatrone im Filtergehäuse, beispielsweise mechanisch, über eine RFID-Technologie und/oder elektrisch.

Ferner ist es vorteilhaft, wenn eine Umlaufkante einer ersten axialen Endfläche (an einem ersten axialen Ende) des Grundkörpers, vorzugsweise vollständig, in einer Ebene liegt, in der eine axiale Endfläche des Filterelements angeordnet ist. Dadurch wird vorteilhafterweise gewährleistet, dass die Filterpatrone an der axialen Endfläche des Filterelements in Axialrichtung bündig abschließt/endet, so dass keine Bestandteile der Filterpatrone in Axialrichtung aus dem Filterelement herausragen.

Zudem ist es zweckmäßig, wenn die Umlaufkante des Grundkörpers die Form eines Kreises aufweist. Dadurch kann die Strömung gleichmäßig in Radialrichtung aufgeweitet werden.

Außerdem ist es vorteilhaft, wenn der Grundkörper als Kegelstumpf oder als Parabelstumpf ausgebildet ist. So kann er besonders energieverlustarm die Strömung des Druckluftstroms, die in Axialrichtung auf den Grundkörper auftrifft, entlang seiner Oberfläche aufweiten.

Ferner ist es von Vorteil, wenn ein Außendurchmesser des Grundkörpers von der ersten axialen Endfläche des Grundkörpers zu einer zweiten axialen Endfläche, die der ersten axialen Endfläche des Grundkörpers gegenüberliegt, zunimmt. So kann ein Druckluftstrom vorteilhafterweise entlang der Oberfläche des Grundkörpers radial nach außen geleitet, also aufgeweitet, werden.

Besonders bevorzugt ist es, wenn die Steigung des Außendurchmessers des Grundkörpers von der ersten axialen Endfläche zu der zweiten axialen Endfläche des Grundkörpers abnimmt. Dadurch wird erreicht, dass der Druckluftstrom zuerst stärker aufgeweitet wird und mit zunehmender Axiallänge sanfter, d.h. weniger stark, nach außen geleitet wird.

Außerdem ist es günstig, wenn der Grundkörper hohlwandig oder als Vollkörper ausgebildet ist. D.h., es ist insbesondere von Bedeutung, wie die Oberfläche des Grundkörpers geformt ist.

Weiterhin ist es zweckmäßig, wenn die erste axiale Endfläche des Grundkörpers eben oder konkav ist. D.h., dass der Grundkörper in Axialrichtung nicht aus dem Filterelement herausragt, sondern bündig mit der axialen Endfläche des Filterelements abschließt oder nach innen gewölbt ist.

Die Aufgabe der Erfindung wird auch durch einen Bausatz aus einem Endstück und einer erfindungsgemäßen Filterpatrone zum Entfernen von Verunreinigungen aus einem zu filternden Rohgasstrom gelöst, wobei die Filterpatrone ein zylindrisches Filterelement aus Filtermaterial, in dem ein Filtereinsatz aus Filtermaterial eingesetzt ist, wobei zwischen dem Filterelement und dem Filtereinsatz ein Innenraum gebildet ist, wobei das Filtermaterial ausgelegt ist, um bei Beaufschlagen mit einem Druckluftstrom entgegen einer Durchströmrichtung des Rohgasstroms gereinigt zu werden, und einen Grundkörper aufweist, wobei der Grundkörper in Zusammenwirken mit dem Endstück eine Strömungsleitvorrichtung zum Leiten des Druckluftstroms bildet.

Weiterhin wird die Aufgabe der Erfindung wird auch durch eine Filteranlage zum Entfernen von Verunreinigungen aus einem zu filternden Rohgasstrom, mit einem Gehäuse, in dem zumindest eine erfindungsgemäße Filterpatrone angeordnet ist, und mit einem Endstück, das an dem Gehäuse befestigt ist, wobei eine axiale Endfläche des Endstücks einer ersten axialen Endfläche des Grundkörpers der Filterpatrone zugewandt angeordnet ist.

Bevorzugterweise weist die Filteranlage einen Drucklufttank, der zumindest eine Düse aufweist und ausgelegt ist, um den Druckluftstrom zum Beaufschlagen des Filtermaterials auszustoßen, auf.

Zudem ist es vorteilhaft, wenn die Umlaufkante der ersten axialen Endfläche des Grundkörpers die Form eines Kreises aufweist, dessen Außendurchmesser dem Außendurchmesser einer Umlaufkante einer axialen Endfläche des Endstücks entspricht.

Besonders bevorzugt ist es, wenn das Endstück die Form einer um die Längsachse rotierten Parabel besitzt. Besonders bevorzugt ist es, wenn das Endstück und der Grundkörper gemeinsam die Form einer um die Längsachse rotierten Parabel besitzen, wobei das Endstück ein oberer Teil des Parabelkörpers ist und der Grundkörper ein unterer Teil des Parabelkörpers ist.

Weiterhin ist es bevorzugt, wenn die erste axiale Endfläche des Grundkörpers an der axialen Endfläche des Endstücks anliegt. Dadurch wird ein gemeinsamer Körper gebildet, der die Strömungsleitvorrichtung darstellt.

Zusätzlich ist es von Vorteil, wenn das Endstück und der Grundkörper so angeordnet sind, dass eine Außenform des Endstücks stufenlos in eine Außenform des Grundkörpers übergeht.

Die Aufgabe der Erfindung wird auch durch ein Verfahren zum Reinigen einer erfindungsgemäßen Filterpatrone, vorzugsweise in einer solchen Filteranlage, gelöst, wobei ein Druckluftstrom von einer Düse eines Drucklufttanks der Filteranlage ausgestoßen wird, der danach die Strömungsleitvorrichtung, die den Grundkörper und das Endstück aufweist, anströmt und durch die Außenform der Strömungsleitvorrichtung so aufgeweitet wird, dass er zumindest 80%, bevorzugt mehr als 90%, weiter bevorzugt mehr als 95%, besonders bevorzugt 100%, des Filtermaterials des Filterelements erfasst.

Die Erfindung wird nachfolgend mit Hilfe von Zeichnungen erläutert. Es zeigen:

Fig. 1 eine schematische Längsschnittdarstellung einer Filterpatrone in einem ersten, nicht beanspruchten Beispiel mit einem konischen Filtereinsatz, einem zylindrischen Filterelement und einer innerhalb der Filterpatrone angeordneten Strömungsleitvorrichtung,

Fig. 2 eine schematische Längsschnittdarstellung der Filterpatrone in einem zweiten, nicht beanspruchten Beispiel,

Fig. 3 eine schematische Längsschnittdarstellung einer erfindungsgemäßen Filterpatrone in einem Ausführungsbeispiel, bei dem die Strömungsleitvorrichtung teilweise in innerhalb der Filterpatrone und teilweise außerhalb der Filterpatrone angeordnet ist,

Fig. 4 eine schematische Längsschnittdarstellung der Filterpatrone in einem dritten, nicht beanspruchten Beispiel mit dem zylindrischen Filterelement und einem zylindrischen Filtereinsatz,

Fig. 5 eine schematische Längsschnittdarstellung der Filterpatrone in einem vierten, nicht beanspruchten Beispiel, bei dem die Strömungsleitvorrichtung vollständig außerhalb der Filterpatrone angeordnet ist,

Fig. 6 eine schematische Längsschnittdarstellung der Filterpatrone in einem weiteren Ausführungsbeispiel mit dem zylindrischen Filterelement und einem zylindrischen Filtereinsatz aus luftundurchlässigem Material, der als ein Verdrängungskörper dient,

Fig. 7 eine schematische Längsschnittdarstellung der Filterpatrone in einem fünften, nicht beanspruchten Beispiel,

Fig. 8 eine schematische Längsschnittdarstellung der Filterpatrone in einem zusätzlichen Ausführungsbeispiel, bei dem die Strömungsleitvorrichtung teilweise in innerhalb der Filterpatrone und teilweise außerhalb der Filterpatrone angeordnet ist,

Fig. 9 eine schematische Querschnittsdarstellung der Filterpatrone mit dem konischen Filtereinsatz,

Fig. 10 eine schematische Querschnittsdarstellung, geschnitten im axialen Bereich des Filtereinsatzes, der Filterpatrone mit dem zylindrischen Filtereinsatz aus Filtermaterial,

Fig. 11a eine schematische Längsschnittdarstellung einer geteilten Strömungsleitvorrichtung,

Fig. 11b eine schematische Längsschnittdarstellung der Strömungsleitvorrichtung,

Fig. 12 eine schematische Querschnittsdarstellung der Filterpatrone,

Fig. 13 eine schematische Längsschnittdarstellung einer erfindungsgemäßen Filteranlage, und

Fig. 14 eine schematische Längsschnittdarstellung der Filteranlage in einem nicht beanspruchten Beispiel.

Die Figuren sind lediglich schematischer Natur und dienen ausschließlich dem Verständnis der Erfindung. Die gleichen Elemente werden mit denselben Bezugszeichen versehen. Die Merkmale der unterschiedlichen Ausführungsbeispiele können untereinander ausgetauscht werden.

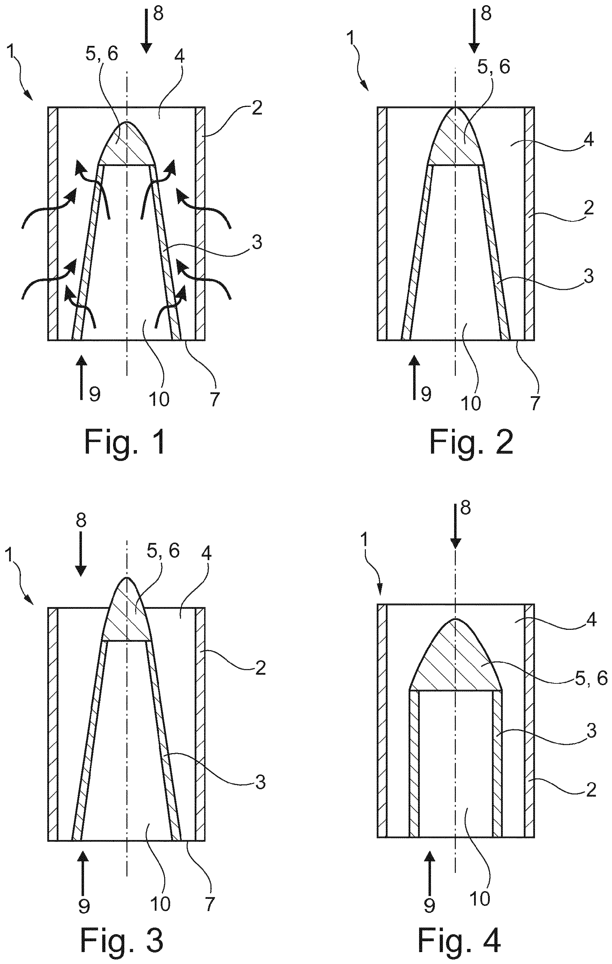

Fig. 1 zeigt eine Filterpatrone 1 zum Entfernen von Verunreinigungen aus einem zu filternden Rohgasstrom. Die Filterpatrone 1 weist ein zylindrisches Filterelement 2 auf, wobei das Filterelement 2 aus Filtermaterial gebildet ist. In dem zylindrischen Filterelement 2 ist ein Filtereinsatz 3 eingesetzt, wobei der Filtereinsatz auch aus Filtermaterial gebildet ist. Das Filterelement 2 und der Filtereinsatz 3 sind koaxial zueinander angeordnet. Innerhalb der Filterpatrone 1 wird also ein Innenraum 4 gebildet, der im Bereich zwischen dem Filterelement 2 und dem Filtereinsatz 3 ringförmig ausgebildet. Das Filtermaterial des Filterelements 2 und des Filtereinsatzes 3 ist so ausgelegt, dass es bei Beaufschlagen mit einem Druckluftstrom, der entgegen einer Durchströmrichtung des Rohgasstroms strömt, gereinigt wird. Die Filterpatrone 1 weist eine als Strömungsleitvorrichtung 5 ausgebildete Kappe 6 auf, die so angeordnet ist und bezüglich ihrer Außenform ausgebildet ist, dass der Druckluftstrom durch die Kappe 6 so aufgeweitet wird, dass das gesamte Filtermaterial des Filterelements 2 vom Druckluftstrom erfasst wird und ein dabei auftretender Energieverlust klein gehalten wird. Die Kappe 6 ist in dem ersten, nicht zur Erfindung gehörenden Beispiel aus Fig. 1 vollständig innerhalb der Filterpatrone 1 angeordnet. Die Kappe 6 ist an dem Filtereinsatz 3 befestigt. Die Kappe 6 weist einen parabelförmigen Querschnitt auf, d.h., dass die Kappe 6 einer Parabel, die um die Längsachse (der Parabel) rotiert wird, entspricht.

An einem in den Zeichnungen unteren Ende der Filterpatrone 1 ist zwischen dem Filterelement 2 und dem Filtereinsatz 3 ein Filterboden/Ringbauteil 7 angeordnet, das das Filterelement 2 und den Filtereinsatz 3 verbindet. Eine Richtung, die in den Zeichnungen von oben nach unten führt, wird im Folgenden als eine erste Axialrichtung 8 bezeichnet, während eine zur ersten Axialrichtung entgegengesetzte Richtung als eine zweite Axialrichtung 9 bezeichnet wird. Das Ringbauteil/der Filterboden 7 ist luftundurchlässig ausgebildet, so dass der Rohgasstrom außerhalb der Filterpatrone 1 entweder von außen nach innen durch das Filtermaterial des Filterelements 2 oder von einem Innenbereich 10, der radial innerhalb des Filtereinsatzes 3 angeordnet ist, nach außen durch das Filtermaterial des Filtereinsatzes 3 in den Innenraum 4 gelangen kann. Der Strömungsweg des Rohgasstroms ist in Fig. 1 mit Pfeilen angedeutet.

In einem Filterbetrieb der Filterpatrone 1 strömt der Rohgasstrom in den Innenraum 4 der Filterpatrone 1. Zum Abreinigen der Filterpatrone 1 wird eine

Rohgasstromzuführung unterbrochen und das Filtermaterial der Filterpatrone 1 wird entgegen der Durchströmrichtung im Filterbetrieb mit Druckluft beaufschlagt. D.h., dass ein Druckluftstrom nach Art eines Druckluftstoßes in Richtung der ersten Axialrichtung 8 strömt und auf die Filterpatrone 1, in den Zeichnungen von oben, auftrifft. Durch die Kappe 6 wird der Druckluftstrom in den ringförmigen Teil des Innenraums 4 geleitet, damit er von innen nach außen durch das Filtermaterial des Filterelements 2 und von außen nach innen durch das Filtermaterial des Filtereinsatzes 3 in den Innenbereich 10 strömt und im dem Filtermaterial festgesetzte Partikel wie zum Beispiel Staub löst. Die gelösten Partikel fallen dann in Schwerkraftrichtung nach unten und werden in einem nicht dargestellten Staubsammelbehälter aufgefangen und entfernt.

In der Filterpatrone 1 in Fig. 1 ist der Filtereinsatz 3 konisch ausgebildet. Der Filtereinsatz 3 weist an seinem der ersten Axialrichtung 8 zugewandten Ende, einem ersten axialen Ende, einen kleineren Außendurchmesser auf als an seinem zweiten axialen Ende, das dem ersten axialen Ende gegenüberliegt. In dem dargestellten Ausführungsbeispiel nimmt der Außendurchmesser von dem ersten axialen Ende zu dem zweiten axialen Ende linear zu, er kann aber auch nichtlinear zunehmen, so dass eine radiale Außenfläche des Filtereinsatzes 3 beispielsweise gekrümmt ausgebildet ist. Auf dem ersten axialen Ende des Filtereinsatzes 3 ist die Kappe 6 angeordnet.

An einer Anlagefläche zwischen dem Filtereinsatz 3 und der Kappe 6 geht der Außendurchmesser der Kappe 6 fließend in den Außendurchmesser des Filtereinsatzes 3 über. Das heißt, dass der Außendurchmesser des Filtereinsatzes 3 an seinem ersten axialen Ende dem Außendurchmesser der Kappe 6 an einem der zweiten Axialrichtung 9 zugewandten Ende, einem zweiten axialen Ende, der Kappe 6 entspricht. Die Kappe 6 nimmt in ihrem Außendurchmesser von ihrem ersten axialen Ende, das dem zweiten axialen Ende gegenüberliegt, bis zu ihrem zweiten axialen Ende zu. In dem dargestellten Beispiel nimmt der Außendurchmesser von dem ersten axialen Ende der Kappe stärker zu, aber mit zunehmender Axiallänge der Kappe 6 schwächer zu. Das heißt, dass die Steigung des Außendurchmessers der Kappe 6 in Axialrichtung (von dem ersten axialen Ende zu dem zweiten axialen Ende hin) abnimmt.

Die Kappe 6 ist in dem dargestellten, nicht zur Erfindung gehörenden Beispiel vollständig innerhalb des Innenraums 4 der Filterpatrone 1 angeordnet, d.h., dass sich die Kappe 6 in Axialrichtung nicht bis zu einem der ersten Axialrichtung 8 zugewandten Ende, einem ersten axialen Ende, der Filterpatrone 1 und damit des Filterelements 2 erstreckt. Der Innenraum 4 der Filterpatrone 1 hat also in dem oberen Bereich der Filterpatrone 1 einen kreisförmigen Querschnitt, der durch die Kappe 6 in einen ringförmigen Querschnitt übergeht.

Die Filterpatrone 1 in dem nicht zur Erfindung gehörenden Beispiel aus Fig. 2 unterscheidet sich von der Filterpatrone 1 aus Fig. 1 darin, dass sich die Kappe 6 in Axialrichtung bis zu dem ersten axialen Ende der Filterpatrone 1 erstreckt. Der Innenraum 4 weist also über die gesamte Axiallänge des Filterelements 2 und damit der Filterpatrone 1 einen ringförmigen Querschnitt auf.

Die Filterpatrone 1 der Ausführungsform in Fig. 3 unterscheidet sich von der Filterpatrone 1 aus Fig. 1 oder Fig. 2 darin, dass sich die Kappe 6 in Axialrichtung bis über das erste axiale Ende der Filterpatrone 1 hinaus erstreckt. Die Kappe 6 ragt also in Axialrichtung aus dem Filterelement 2 heraus. Der Innenraum 4 weist über die gesamte Axiallänge des Filterelements 2 und damit der Filterpatrone 1 einen ringförmigen Querschnitt auf.

In der Filterpatrone 1 in dem nicht zur Erfindung gehörenden Beispiel aus Fig. 4 ist der Filtereinsatz 3 zylindrisch ausgebildet. Das heißt, dass der Filtereinsatz 3 über seine gesamte Axiallänge einen konstanten Außendurchmesser besitzt. Dadurch wird der Innenraum 4 im Bereich der Axiallänge des Filtereinsatzes 3 als ein ringförmiger Innenraum 4 mit konstantem Ringquerschnitt ausgebildet. Die Kappe 6 ist in dem in Fig. 4 dargestellten Ausführungsbeispiel vollständig innerhalb des Innenraums 4 der Filterpatrone 1 angeordnet, d.h., dass sich die Kappe 6 in Axialrichtung nicht bis zu dem ersten axialen Ende der Filterpatrone 1 und damit des Filterelements 2 erstreckt. Der Innenraum 4 der Filterpatrone 1 hat also in dem oberen Bereich der Filterpatrone 1 einen kreisförmigen Querschnitt, der durch die Kappe 6 in einen ringförmigen Querschnitt übergeht.

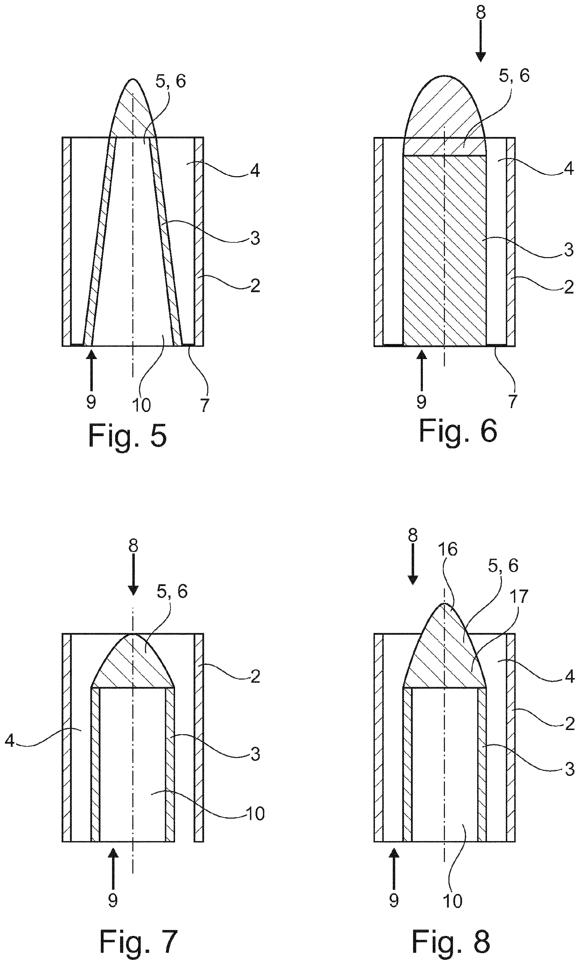

Die Filterpatrone 1 in dem nicht zur Erfindung gehörenden Beispiel aus Fig. 5 unterscheidet sich von der Filterpatrone 1 aus Fig. 3 darin, dass die Kappe 6 vollständig außerhalb der Filterpatrone 1 angeordnet ist. Die Kappe 6 ragt also in Axialrichtung nicht in das Filterelement 2 hinein. In dem in Fig. 5 dargestellten Ausführungsbeispiel schließt die Kappe 6 bündig an einer axialen Stirnseite der Filterpatrone 1 ab, d.h. die Kappe 6 grenzt in Axialrichtung an die Filterpatrone 1 an. Der Filterboden 7 ist als eine Pfanne ausgebildet, in der das Filterelement 2 und der Filtereinsatz 3 über eine Vergussmasse abgedichtet und verbunden werden.

Die Filterpatrone 1 der Ausführungsform in Fig. 6 unterscheidet sich von der Filterpatrone 1 aus Fig. 4 darin, dass das der Filtereinsatz 3 luftundurchlässig ausgebildet ist und als ein Verdrängungskörper dient. Der Filtereinsatz 3 kann dabei wie in Fig. 6 dargestellt als ein Vollkörper oder wie nicht dargestellt als ein Hohlkörper oder schalenartig ausgebildet sein. Durch den als Verdrängungskörper ausgebildeten Filtereinsatz 3 wird das Abreinigungsergebnis verbessert, da der Druckluftstrom nur durch das Filterelement 2 entweichen kann.

Die Filterpatrone 1 in dem nicht zur Erfindung gehörenden Beispiel aus Fig. 7 unterscheidet sich von der Filterpatrone 1 aus Fig. 4 darin, dass sich die Kappe 6 in Axialrichtung bis zu dem ersten axialen Ende der Filterpatrone 1 erstreckt. Der Innenraum 4 weist also über die gesamte Axiallänge des Filterelements 2 und damit der Filterpatrone 1 einen ringförmigen Querschnitt auf. Dabei nimmt der Innendurchmesser des ringförmigen Querschnitts von dem ersten axialen Ende der Filterpatrone 1 bis zu dem ersten axialen Ende des Filtereinsatzes 3 in Abhängigkeit von der Außenform der Kappe 6 zu. Von dem ersten axialen Ende des Filtereinsatzes 3 bis zu dem zweiten axialen Ende der Filterpatrone 1 ist der ringförmige Querschnitt konstant.

In der Filterpatrone 1 der Ausführungsform in Fig. 8 ist die Kappe 6 so angeordnet, dass ein erster Abschnitt der Kappe 6, der das erste axiale Ende der Kappe 6 enthält, in Axialrichtung aus dem Filterelement 2 herausragt und ein anderer zweiter Abschnitt der Kappe 6, der das zweite axiale Ende der Kappe 6 enthält, innerhalb des Filterelements 2 angeordnet ist. Dabei können der erste Abschnitt und der zweite Abschnitt separat voneinander oder integral ausgebildet sein. Dies wird später näher erläutert.

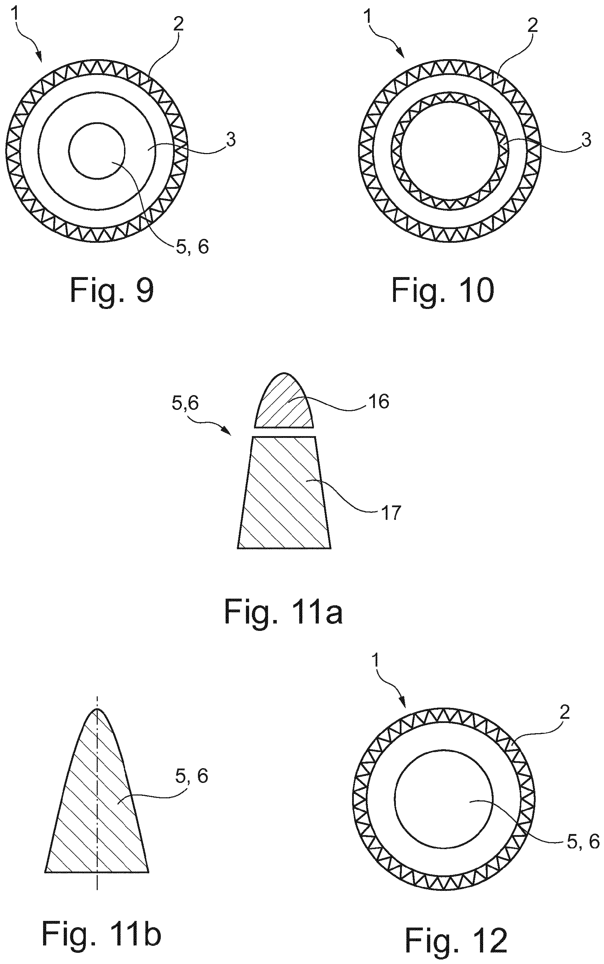

Fign. 9, 10 und 12 zeigen einen Querschnitt der Filterpatrone 1. Das Filterelement 2, der Filtereinsatz 3 und die Kappe 6 sind koaxial zueinander angeordnet. Der Filtereinsatz 3 und die Kappe 6 sind in Axialrichtung übereinander angeordnet, während das Filterelement 2 auf der gleichen axialen Höhe wie der Filtereinsatz 3 und die Kappe 6 angeordnet ist. Der in Fig. 9 dargestellte Querschnitt ist im axialen Bereich der Kappe 6 geschnitten. Das Filterelement 2 besitzt einen größeren Außendurchmesser als der Filtereinsatz 3 und die Kappe 6. Der Filtereinsatz 3 besitzt einen größeren Außendurchmesser als die Kappe 6. Das Filterelement 2 ist aus Filtermaterial hergestellt, das zickzackförmig gefaltet ist, so dass das Filterelement 2 einen sternförmigen Querschnitt aufweist. Auch der Filtereinsatz 3 ist aus zickzackförmig gefaltetem Filtermaterial hergestellt, was in Fig. 10 zu erkennen ist, die einen im axialen Bereich des Filtereinsatzes 3 geschnittenen Querschnitt darstellt. Auch Fig. 12 zeigt einen Querschnitt der Filterpatrone 1, der im axialen Bereich der Kappe 6, aber an einer anderen axialen Position als in Fig. 9, geschnitten ist. Dadurch lässt sich erkennen, dass der Querschnitt der Kappe 6 über die Axialrichtung variiert, während der Querschnitt des Filterelements 2 über die gesamte Axiallänge konstant ist.

Fign. 11a und 11b zeigen schematische Darstellungen der Kappe 6. Die Kappe 6 weist eine Parabelform bzw. eine Wurzelform auf. Die Kappe 6 ist rotationssymmetrisch. Jeder Längsschnitt durch die Achse der Kappe 6 ist gleich und parabelförmig. Eine Außenform der Kappe 6 nimmt im Außendurchmesser von dem ersten axialen Ende zu dem zweiten axialen Ende hin zu. Die Kappe 6 weist an dem ersten axialen Ende eine eierförmig ausgebildete, d.h. rund ausgebildete, Spitze auf. Die Außenform der kappe 6 ist gekrümmt, wobei die Krümmung an dem ersten axialen Ende am größten ist. Die Krümmung nimmt in Axialrichtung von dem ersten axialen Ende bis zu dem zweiten axialen Ende der Kappe 6 ab. Die Außenform der Kappe 6 folgt im Wesentlichen der Funktion f(x) = x^{1/2} bzw. einer ähnlichen Parabelfunktion folgt. Die Kappe 6 kann als Vollkörper oder als Hohlkörper, d.h. schalenartig, ausgebildet sein. Die Außenform der Kappe 6 ist so ausgebildet, dass sie bei einer senkrechten Anströmung, also einer Anströmung aus der ersten Axialrichtung 8, die Anströmung mit besonders wenig Energieverlust aufweitet. Insbesondere ist die Außenform der Kappe 6 für eine Anströmung im Bereich hoher Geschwindigkeiten bis über die Schallgeschwindigkeit optimiert. Die Kappe 6 weist an dem zweiten axialen Ende eine ebene axiale Außenfläche, die senkrecht zu der Achse der Kappe 6 angeordnet ist, auf.

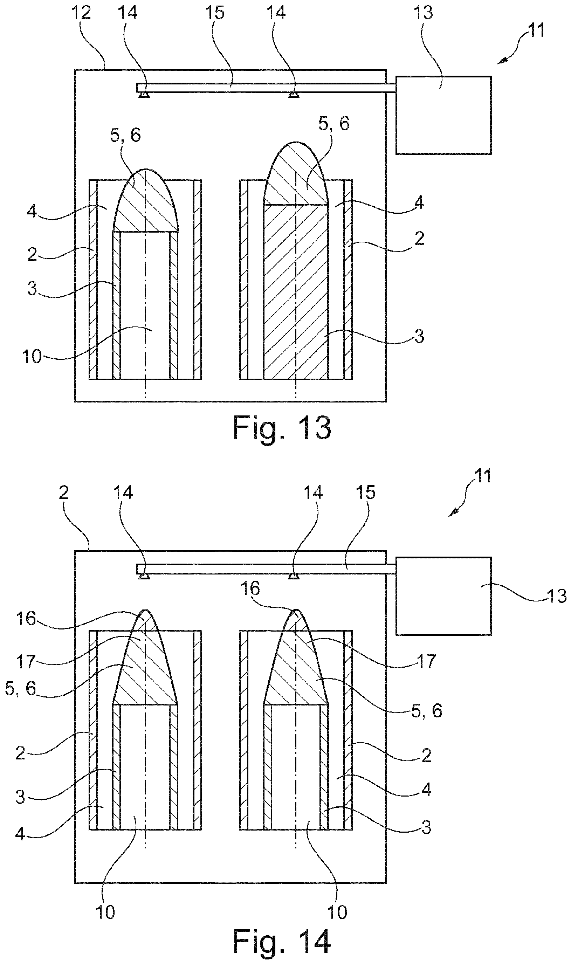

Fig. 13 zeigt eine Ausführungsform einer erfindungsgemäßen Filteranlage 11. Fig. 14 zeigt ein nicht zur Erfindung gehörendes Beispiel einer Filteranlage 11. Die Filteranlage 11 weist ein Gehäuse 12 auf, in dem zwei Filterpatronen 1 angeordnet sind. Die Filterpatronen 1 sind über nicht dargestellte Halteschienen einschiebbar in dem Gehäuse 12 angebracht. In Fig. 13 sind Filterpatronen 1 gemäß einem Ausführungsbeispiel aus Fig. 4 eingesetzt und in Fig. 14 sind Filterpatronen 1 gemäß einem Ausführungsbeispiel aus Fig. 8 eingesetzt. Die Erfindung ist aber nicht auf eine Filteranlage 11 mit den in Fig. 13 und 14 dargestellten Filterpatronen 1 beschränkt. Die Filteranlage 11 weist einen Drucklufttank 13 auf, der wahlweise in dem Gehäuse 12 oder außerhalb des Gehäuses 12 angeordnet ist. Der Drucklufttank 13 ist so ausgelegt, dass er Druckluft, vorzugsweise mit einem Druck von 4 bis 8 bar, über Düsen 14, die über den Filterpatronen 1 angeordnet sind, ausstößt. Der Drucklufttank 13 und die Düsen 14 sind über ein Rohr/eine Blowpipe 15 zum Weitergeben der Druckluft miteinander verbunden. Für jeweils eine Filterpatrone 1 ist eine Düse 14 vorhanden, die jeweils auf der Achse der Filterpatrone 1, aber in Axialrichtung beabstandet angeordnet ist.

Die Außenform der Kappe 6 ist sowohl auf den Abstand zwischen der Düse 14 und dem ersten axialen Ende der Kappe 6 bzw. dem ersten axialen Ende der Filterpatrone 1 als auch auf die Größe des Innenraums 4, insbesondere ein Außendurchmesser des Innenraums 4, also ein Innendurchmesser des Filterelements 2, abgestimmt, damit ein der Druckluftstrom zu dem abzureinigenden Filtermaterial geleitet wird.

In dem in Fig. 14 dargestellten, nicht zur Erfindung gehörenden Beispiel ist die Kappe 6 so ausgebildet, dass ein erster Abschnitt 16/ein Endstück 16 in Axialrichtung aus dem Filterelement 2 herausragt und ein zweiter Abschnitt 17/ein Grundkörper 17 innerhalb des Filterelements 2 angeordnet ist. Dadurch wird der Druckluftstrom schon in Axialrichtung näher an der Düse 14 aufgeweitet, so dass ein axialer Abstand zwischen der Düse und der Filterpatrone 1 verringert werden kann. Der erste Abschnitt 16 und der zweite Abschnitt 17 der Kappe 6 sind integral (vergleiche Fign. 11b und 13) oder separat voneinander (vergleiche Fign. 11a und 14) ausgebildet.

Bei einer separaten Ausbildung ist der erste Abschnitt/das Endstück 16 der Kappe 6 fest mit dem Gehäuse 12 verbunden und der zweite Abschnitt/der Grundkörper 17 der Kappe 6 ist fest mit der Filterpatrone 1 verbunden. Die beiden Abschnitte 16, 17 müssen bei einer separaten Ausbildung nicht miteinander verbunden sein. Es ist ausreichend, wenn die beiden Abschnitte 16, 17 aneinander anliegend oder mit einem geringen Spalt, der beispielsweise kleiner als eine Wanddicke des Filterelements 2 ist, zwischen den beiden Abschnitten 16, 17 angeordnet sind. Der zweite Abschnitt 17 weist also die Form eines Parabelstumpfes auf. Wird in einer Filteranlage 11 aus Fig. 14 eine Filterpatrone 1 ausgetauscht, verbleibt der erste Abschnitt 16 der Kappe 6 in dem Gehäuse 12.

Der zweite Abschnitt 17 der Kappe 6 weist an seinem ersten axialen Ende, das der ersten Axialrichtung 8 zugewandt ist, eine ebene axiale Außenfläche auf. Die (erste) axiale Außenfläche/Endfläche ist kreisförmig und hat denselben Außendurchmesser wie eine axiale Außenfläche/Endfläche des ersten Abschnitts 16. Eine axiale Außenkante/eine Umlaufkante der axialen Endfläche des zweiten Abschnitts 17 der Kappe 6 liegt vollständig in einer Ebene, in der auch eine axiale Endfläche Filterelements 2 angeordnet ist. Das heißt, dass der zweite Abschnitt 17 der Kappe 6 in Axialrichtung bündig mit dem Filterelement 2 abschließt. Der zweite Abschnitt 17 der Kappe 6 nimmt in seinem Außendurchmesser von dem ersten axialen Ende des zweiten Abschnitts 17 bis zu dem zweiten axialen Ende des zweiten Abschnitts 17 zu. Dabei sind radiale Außenflächen des zweiten Abschnitts 17 vorzugsweise leicht nach außen gekrümmt oder linear/eben/gerade ausgebildet.

### Bezugszeichenliste

- 1: Filterpatrone
- 2: Filterelement
- 3: Filtereinsatz
- 4: Innenraum
- 5: Strömungsleitvorrichtung
- 6: Kappe
- 7: Ringbauteil/Filterboden
- 8: erste Axialrichtung
- 9: zweite Axialrichtung
- 10: Innenbereich
- 11: Filteranlage
- 12: Gehäuse
- 13: Drucklufttank
- 14: Düse
- 15: Rohr
- 16: erster Abschnitt/Endstück
- 17: zweiter Abschnitt/Grundkörper

## Patentansprüche

1. Filterpatrone (1) zum Entfernen von Verunreinigungen aus einem zu filternden Rohgasstrom, mit einem zylindrischen Filterelement (2) aus Filtermaterial, in dem ein Filtereinsatz (3) eingesetzt ist, wobei zwischen dem Filterelement (2) und dem Filtereinsatz (3) ein ringförmiger Innenraum (4) gebildet ist, wobei das Filtermaterial ausgelegt ist, um bei Beaufschlagen mit einem Druckluftstrom entgegen einer Durchströmrichtung des Rohgasstroms gereinigt zu werden, und mit einer als Strömungsleitvorrichtung (5) ausgebildeten Kappe (6) zum Aufweiten des Druckluftstroms, wobei die Kappe (6) an einem axialen Ende des Filtereinsatzes (3) angeordnet, an dem Filtereinsatz (3) befestigt und so angeordnet ist, dass sie über eine Axiallänge des Filterelements (2) in Axialrichtung hervorsteht, wobei ein erster Abschnitt (16) der Kappe (6) in Axialrichtung außerhalb des Filterelements (2) angeordnet ist und ein zweiter Abschnitt (17) der Kappe (6) innerhalb des Filterelements (2) angeordnet ist, **dadurch gekennzeichnet, dass** eine Außenform der Kappe (6) einer Parabelfunktion folgt und der erste Abschnitt (16) der Kappe (6) in Axialrichtung eine Axiallänge hat, die 0,5- bis 1,0-mal so groß wie ein Innendurchmesser des Filterelements (2) ist.

2. Filterpatrone (1) nach Anspruch 1, **dadurch gekennzeichnet, dass** eine Oberfläche des zweiten Abschnitts (17), insbesondere eine radiale Außenfläche, so ausgeformt und angeordnet ist, dass sie in eine Außenoberfläche, insbesondere eine radiale Außenfläche, des ersten Abschnittes (16) nahtlos und/oder stufenlos und/oder steigungskonform und/oder krümmungskonform übergeht.

3. Filterpatrone (1) nach Anspruch 1 oder 2, **dadurch gekennzeichnet, dass** der erste Abschnitt (16) der Kappe (6) eine größere Axiallänge als der zweite Abschnitt (17) der Kappe (6) besitzt.

4. Filteranlage (11) zum Entfernen von Verunreinigungen aus einem zu filternden Rohgasstrom, mit einem Gehäuse (12), in dem zumindest eine Filterpatrone (1) nach einem der Ansprüche 1 bis 3 angeordnet ist, und mit einem Drucklufttank (13), der zumindest eine Düse (14) aufweist und ausgelegt ist, um den Druckluftstrom aus der Düse (14) zum Beaufschlagen des Filtermaterials auszustoßen.

5. Filteranlage (11) nach Anspruch 4, **dadurch gekennzeichnet, dass** ein Abstand zwischen dem Filterelement (2) und der Düse (14) kleiner als das 2,0-fache der Größe des Innendurchmessers des Filterelements (2) ist.

6. Filteranlage (11) nach Anspruch 4 oder 5, **dadurch gekennzeichnet, dass** eine Außenform der Kappe (6) sowohl auf den Abstand zwischen der Kappe (6) und der Düse (14) als auch auf den Innendurchmesser des Filterelements (2) abgestimmt ist, so dass der Druckluftstrom so aufgeweitet wird, dass das Filtermaterial des Filterelements (2) von dem Druckluftstrom erfasst wird.

7. Verfahren zum Reinigen einer Filterpatrone (1) nach einem der Ansprüche 1 bis 3, vorzugsweise in einer Filteranlage (11) nach einem der Ansprüche 4 bis 6, wobei ein Druckluftstrom von einer Düse (14) ausgestoßen wird, der danach die Kappe (6) der Filterpatrone (1) anströmt und durch die Außenform der Kappe (6) so aufgeweitet wird, dass er das gesamte Filtermaterial des Filterelements (2) erfasst.

## Claims

1. A filter cartridge (1) for removing impurities from a stream of raw gas to be filtered, comprising a cylindrical filter element (2) which is made of a filter material and in which a filter insert (3) is inserted, an interior space (4) being formed between the filter element (2) and the filter insert (3), the filter material being designed to be cleaned when a stream of compressed air is applied against a flow direction of the stream of raw gas, and having a cap (6) designed as a flow guiding device (5) provided for expanding the stream of compressed air, wherein the cap (6) is arranged at an axial end of the filter insert (3), is fixed to the filter insert (3), and is arranged such that it projects beyond an axial length of the filter element (2) in the axial direction, wherein a first portion (16) of the cap (6) is arranged outside the filter element (2) in the axial direction and a second portion (17) of the cap (6) is arranged inside the filter element (2), **characterized in that** an outer shape of the cap (6) follows a parabolic function and the first portion (16) of the cap (6) has an axial length in the axial direction which is 0.5 to 1.0 times as large as an inner diameter of the filter element (2).

2. Filter cartridge (1) according to claim 1, **characterized in that** a surface of the second section (17), in particular a radial outer surface, is shaped and arranged in such a way that it merges into an outer surface, in particular a radial outer surface, of the first section (16) in a seamless and/or stepless and/or slope-conforming and/or curvature-conforming manner.

3. The filter cartridge (1) according to claim 1 or 2, **characterized in that** the first portion (16) of the cap (6) has a greater axial length than the second portion (17) of the cap (6).

4. A filter system (11) for removing impurities from a stream of raw gas to be filtered, comprising a housing (12) in which at least one filter cartridge (1) according to any of claims 1 to 3 is arranged, and a compressed air tank (13) which comprises at least one nozzle (14) and is designed to eject the stream of compressed air from the nozzle (14) for impinging the filter material.

5. The filter system (11) according to claim 4, **characterized in that** a distance between the filter element (2) and the nozzle (14) is smaller than 2.0 times the size of the inner diameter of the filter element (2).

6. The filter system (11) according to claim 4 or 5, **characterized in that** an outer shape of the cap (6) is matched both to the distance between the cap (6) and the nozzle (14) and to the inner diameter of the filter element (2), so that the stream of compressed air is expanded such that the filter material of the filter element (2) is hit by the stream of compressed air.

7. A method for cleaning a filter cartridge (1) according to one of claims 1 to 3, preferably in a filter system (11) according to one of claims 4 to 6, wherein a stream of compressed air is ejected from a nozzle (14) which then flows against the cap (6) of the filter cartridge (1) and is expanded by the outer shape of the cap (6) such that it hits the entire filter material of the filter element (2).

## Revendications

1. Cartouche filtrante (1) destinée à éliminer des impuretés d'un flux de gaz brut à filtrer, avec un élément filtrant cylindrique (2) en matériau filtrant, dans laquelle un insert filtrant (3) est introduit, dans laquelle un espace intérieur en forme d'anneau (4) est formé entre l'élément filtrant (2) et l'insert filtrant (3), dans laquelle le matériau filtrant est agencé, pour être purifié lors de la sollicitation avec un courant d'air comprimé dans le sens inverse de la direction d'écoulement du flux de gaz brut, et pour élargir le courant d'air comprimé avec un bouchon (6) conçu en tant que dispositif de guidage de flux (5), dans laquelle le bouchon (6) est disposé au niveau d'une extrémité axiale de l'insert filtrant (3), fixé au niveau de l'insert filtrant (3) et disposé de telle manière qu'il fait saillie sur une longueur axiale de l'élément filtrant (2) dans la direction axiale, dans laquelle une première section (16) du bouchon (6) est disposée dans la direction axiale à l'extérieur de l'élément filtrant (2) et une seconde section (17) du bouchon (6) est disposée à l'intérieur de l'élément filtrant (2),
**caractérisée en ce qu'**une forme extérieure du bouchon (6) suit une fonction parabolique et la première section (16) du bouchon (6) présente une longueur axiale dans la direction axiale, qui est de 0,5 à 1,0 fois plus grand qu'un diamètre intérieur de l'élément filtrant (2).

2. Cartouche filtrante (1) selon la revendication 1, **caractérisée en ce qu'**une surface de la seconde section (17), en particulier une surface externe radiale, est réalisée et disposée de telle sorte qu'elle passe dans une surface externe, en particulier une surface externe radiale, de la première section (16) sans soudure et/ou en continu et/ou conforme à l'inclinaison et/ou conforme à la courbure.

3. Cartouche filtrante (1) selon la revendication 1 ou 2, **caractérisée en ce que** la première section (16) du bouchon (6) possède une longueur axiale supérieure à celle de la seconde section (17) du bouchon (6).

4. Installation filtrante (11) destinée à éliminer des impuretés d'un flux de gaz brut à filtrer, avec un logement (12), dans laquelle est disposée au moins une cartouche filtrante (1) selon l'une quelconque des revendications 1 à 3, et avec un réservoir d'air comprimé (13), qui présente au moins une buse (14) et est agencé pour expulser le courant d'air comprimé de la buse (14) pour solliciter le matériau filtrant.

5. Installation filtrante (11) selon la revendication 4, **caractérisée en ce qu'**une distance entre l'élément filtrant (2) et la buse (14) est inférieure au double de la taille du diamètre intérieur de l'élément filtrant (2).

6. Installation filtrante (11) selon la revendication 4 ou 5, **caractérisée en ce qu'**une forme extérieure du bouchon (6) est aussi bien adaptée à la distance entre le bouchon (6) et la buse (14) qu'au diamètre intérieur de l'élément filtrant (2), de sorte que le courant d'air comprimé est élargi de telle manière que le matériau filtrant de l'élément filtrant (2) est détecté par le courant d'air comprimé.

7. Procédé de purification d'une cartouche filtrante (1) selon l'une quelconque des revendications 1 à 3, de préférence dans une installation filtrante (11) selon l'une quelconque des revendications 4 à 6, dans lequel un courant d'air comprimé est expulsé d'une buse (14), qui s'écoule ensuite vers le bouchon (6) de la cartouche filtrante (1) et est élargi par la forme extérieure du bouchon (6) de telle manière qu'il détecte l'ensemble du matériau filtrant de l'élément filtrant (2).
